# EUROPEAN PATENT SPECIFICATION

(11) **EP 4 216 342 B1**
(45) Date of publication and mention of the grant of the patent: **11.11.2026**
(21) Application number: 22820537.3
(22) Date of filing: 07.06.2022
(51) Int. Cl.: H01M 10/6551, H01M 10/6567, H01M 10/625, H01M 10/613, H01M 10/48, H01M 50/502, H01M 50/211, H01M 50/249, H01M 10/647

(54) **BATTERY MODULE, AND BATTERY PACK AND VEHICLE INCLUDING THE SAME**
BATTERIEMODUL SOWIE BATTERIEPACK UND FAHRZEUG DAMIT
MODULE DE BATTERIE, ET BLOC-BATTERIE ET VÉHICULE LE COMPRENANT

(30) Priority: 08.06.2021 KR 20210074425
(43) Date of publication of application: 26.07.2023
(73) Proprietor: LG Energy Solution, Ltd., Seoul 07335 (KR)
(72) Inventor: JU, Eun-Ah, Daejeon 34122 (KR); YUN, Hyeon-Ki, Daejeon 34122 (KR); TANNENBERGER, Guenter, 85123 Pobenhausen (DE); JANKE, Jan, 74336 Brackenheim (DE); HARASZTOSI, Uwe, 74172 Neckarsulm (DE)
(74) Representative: Goddar, Heinz J.
(86) International application number: PCT/KR2022/008029
(87) International publication number: WO 2022/260409

(56) References cited:
- JP-A- 2009 009 853
- KR-A- 20190 064 887
- KR-A- 20200 080 076
- KR-B1- 101 821 376
- US-A1- 2011 020 677
- US-A1- 2017 162 923
- US-A1- 2018 145 294
- US-A1- 2020 076 025
- US-A1- 2021 119 309

## Description

### TECHNICAL FIELD

The present disclosure relates to a battery module, and a battery pack and a vehicle including the same, and more specifically, to a battery module having a structure in which an insulating cooling liquid flowing into a module housing cools battery cells while flowing through a space between a cell wing portion of the battery cell and the module housing, and a battery pack and a vehicle including the same.

The present application claims priority to Korean Patent Application No. 10-2021-0074425 filed on June 8, 2021 in the Republic of Korea.

### BACKGROUND ART

In the case of a battery module that uses indirect water cooling using a cooling water, the cooling performance is limited because the cooling water does not directly contact a battery cell but indirectly contacts the battery cell through a module housing that houses the battery cell. In addition, since a cooling device such as a separate heatsink must be provided outside the module housing to form a flow path for cooling, the overall volume of the battery module is inevitably increased, which inevitably causes loss in terms of energy density.

In order to solve the problem of the indirect water cooling method, it is required to develop a battery module having a cooling structure in which an insulating cooling liquid for cooling is directly introduced into the module housing to come into direct contact with the battery cell.

The prior art relevant to the present invention is given by US 2020/0076025 A1, US 2021/0119309 A1, US 2018/0145294 A1 and US 2011/0020677 A1. US 2020/0076025 A1 describes a battery module having heat dissipation plates provided so as to form inlet and outlet portions for conducting a coolant.

### DISCLOSURE

### Technical Problem

The present disclosure is designed to solve the problems of the related art, and therefore the present disclosure is directed to providing a battery module having a structure in which an insulating cooling liquid is introduced into the battery module and comes into direct contact with a battery cell to realize efficient cooling, and the cooling liquid introduced into the battery module may flow smoothly.

In addition, the present disclosure has another object to prevent a sensing line and a temperature sensor provided for sensing the voltage and temperature of the battery cell from being damaged by an insulating cooling liquid flowing inside the battery module, and to enable accurate temperature measurement.

### Technical Solution

The invention relates to a battery module as defined in claim 1 which comprises: a sub module including a cell stack assembly having a plurality of battery cells and a cooling fin interposed between adjacent battery cells; a module housing configured to accommodate the sub module; a front sealing plate configured to cover an opening at one longitudinal side of the module housing and having an inlet; a rear sealing plate configured to cover an opening at the other longitudinal side of the module housing and having an outlet; and a sensing assembly configured to sense voltage of the battery cell.

The sensing assembly may be disposed on a top of the sub module.

The sensing assembly includes a sensing line electrically connected to the plurality of battery cells and extending from one longitudinal end of the battery cells to the other longitudinal end.

The sensing line is interposed between a cell body portion of the battery cell and a cell wing portion folded toward the cell body portion.

The sensing assembly may further include a temperature sensor mounted on the sensing line.

The temperature sensor may be interposed between a cell body portion of the battery cell and a cell wing portion folded toward the cell body portion.

The cooling fin may include a body contact portion interposed between adjacent battery cells, and a wing cover portion bent at any one of a top and bottom of the body contact portion to cover a cell wing portion of the battery cell.

The sub module may include a front bus bar frame assembly coupled to one longitudinal side of the cell stack assembly; and a rear bus bar frame assembly coupled to the other longitudinal side of the cell stack assembly.

The front bus bar frame assembly and the rear bus bar frame assembly may have a plurality of cooling liquid holes formed at a position corresponding to a cooling liquid flow path formed between the module housing and the cell wing portion of the battery cell and between the wing cover portion and the cell wing portion of the battery cell.

An insulating cooling liquid introduced into the module housing through the inlet may pass through the cooling liquid hole formed in the front bus bar frame assembly and flow to the cooling liquid flow path.

The insulating cooling liquid passing through the cooling liquid flow path may pass through the cooling liquid hole formed in the rear bus bar frame assembly and be discharged to the outside of the module housing through the outlet.

The invention also relates to a battery pack as defined in claim 10 and a vehicle as defined in claim 11.

### Advantageous Effects

According to one aspect of the present disclosure, the insulating cooling liquid flows into the battery module and directly contacts the battery cell, and the cooling liquid introduced into the battery module may flow smoothly, thereby allowing efficient and rapid cooling.

According to another aspect of the present disclosure, it is possible to prevent the sensing line and the temperature sensor provided for sensing the voltage and temperature of the battery cell from being damaged by the insulating cooling liquid flowing inside the battery module, and to enable accurate temperature measurement by minimizing the influence of the insulating cooling liquid in measuring the temperature of the battery cell.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a complete perspective view showing a battery module according to an embodiment of the present disclosure.
FIG. 2 is an exploded perspective view showing a battery module according to an embodiment of the present disclosure.
FIG. 3 is a view showing a cross-section, taken along the line A-A' of FIG. 1.
FIG. 4 is a view showing a state in which the front end plate and the front sealing plate are removed in the battery module shown in FIG. 1.
FIGS. 5 and 6 are views showing the flow of the insulating cooling liquid for cooling.
FIGS. 7 and 8 are views showing a coupling relationship between a cooling fin and a battery cell according to the present disclosure.
FIG. 9 is a perspective view showing a cooling fin according to the present disclosure.
FIG. 10 is a diagram showing a coupling structure of a bus bar frame assembly and a cooling fin according to the present disclosure.
FIGS. 11 and 12 are views showing a specific structure of a terminal assembly according to the present disclosure.
FIG. 13 is a diagram showing an arrangement structure of a sensing assembly according to the present disclosure.

### BEST MODE

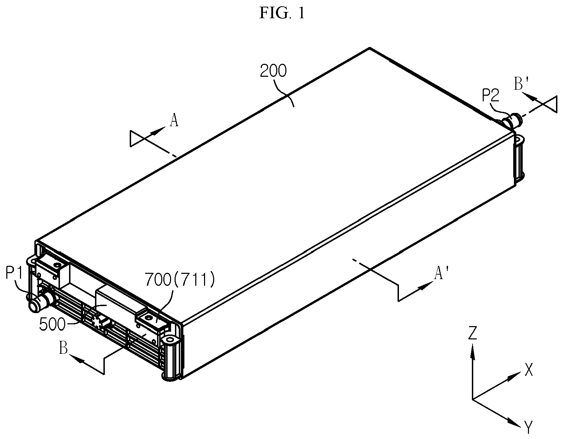

Referring to FIGS. 1, 2 and 4, the battery module according to an embodiment of the present invention includes a sub module 100, a module housing 200, a front sealing plate 300, a rear sealing plate 400 and a sensing assembly 800. The battery module may further include a front end plate 500 and/or a rear end plate 600 and/or a pair of terminal assemblies 700 in addition to the above-described components.

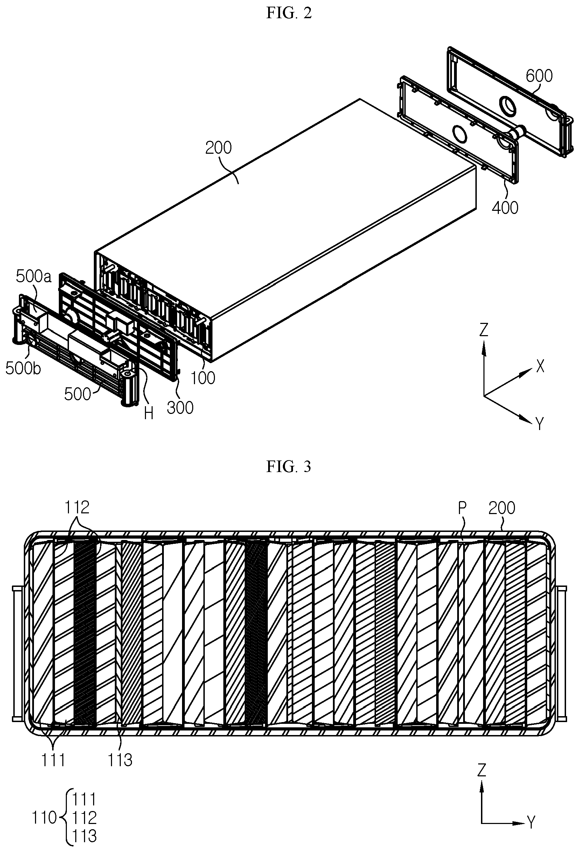

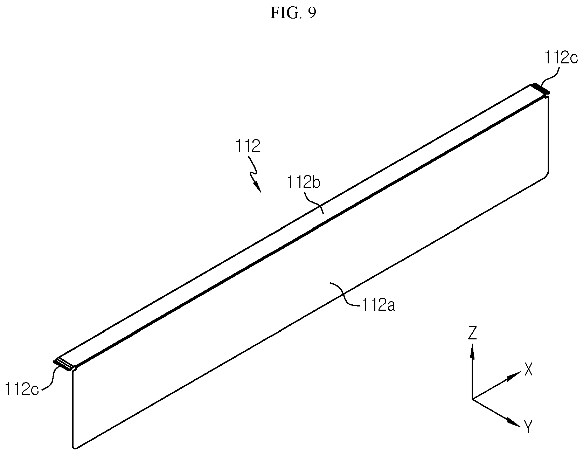

Referring to FIGS.2 to 9, the sub module 100 includes a cell stack assembly 110. The sub module 100 includes a front bus bar frame assembly 120A and a rear bus bar frame assembly 120B in addition to the cell stack assembly 110.

The cell stack assembly 110 includes a plurality of battery cells 111. In addition, the cell stack assembly 110 may further include at least one cooling fin 112 interposed between adjacent battery cells 111 and/or at least one buffer pad 113 interposed between the adjacent battery cells 111. The plurality of battery cells 111 are stacked approximately in a vertical standing form on the ground (a side parallel to the X-Y plane) to form a single cell stack assembly 110. When the cell stack assembly 110 includes the cooling fin 112 and/or the buffer pad 113, the cooling fin 112 and/or the buffer pad 113 are also stacked in a vertical standing form approximately perpendicular to the ground (surface parallel to the X-Y plane) together with the plurality of battery cells 111 to form a single cell stack assembly 110.

As the battery cell 111, a pouch-type battery cell having a pair of electrode leads 111a drawn out in opposite directions along the longitudinal direction (parallel to the X-axis) may be used.

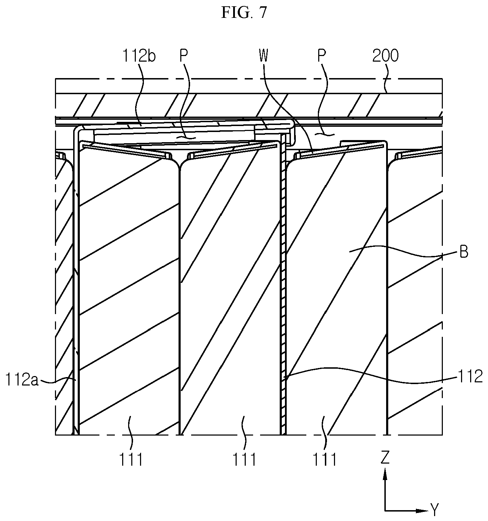

Referring to FIGS. 7 to 9, the cooling fin 112 includes a body contact portion 112a interposed between the battery cells 111 adjacent to each other, and a wing cover portion 112b bent at any one of the top and bottom of the body contact portion 112a to cover the cell wing portion W of the battery cell 111. The cooling fin 112 may further include a pair of fixing portions 112c formed at both ends in the longitudinal direction (parallel to the X-axis) of the wing cover portion 112b.

As shown in FIG. 7, when the battery cell 111 is of a pouch type, an area in which an electrode assembly (not shown) is accommodated may be defined as the cell body portion B, and a region elongated along the longitudinal direction (parallel to the X-axis) of the battery module in the sealing area formed around the cell body portion B may be defined as the cell wing portion W.

The body contact portion 112a is interposed between the cell body portions B of the pair of adjacent battery cells 111 and is in direct contact with the cell body portions B of the battery cells 111. The body contact portion 112a rapidly conducts heat generated from the cell body portion B of the battery cell 111 in the width direction of the cooling fin 112, that is, in the height direction (parallel to the Z-axis) of the battery module to move toward the wing cover portion 112b. As such, the heat conducted toward the wing cover portion 112b is transferred along the longitudinal direction (parallel to the X-axis) of the battery module by the insulating cooling liquid flowing through the cooling liquid flow path P formed between the cell wing portion W of the battery cell 111 and the wing cover portion 112b of the cooling fin 112 and is discharged to the outside of the battery module.

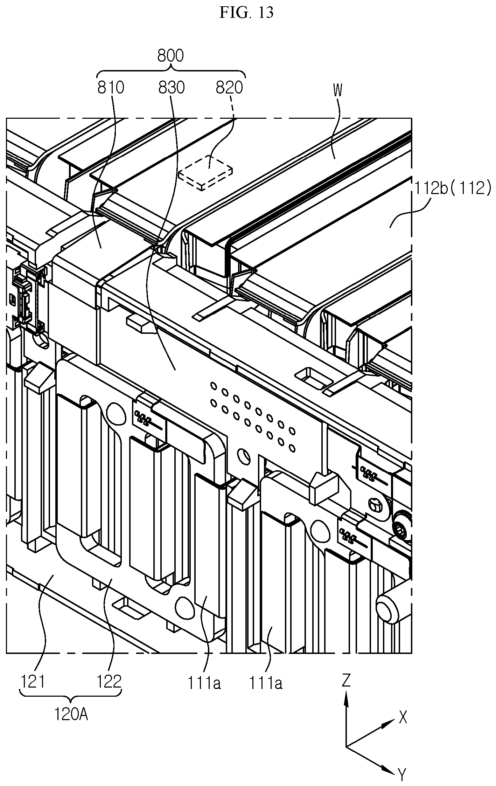

In addition to forming the cooling liquid flow path P as described above, the wing cover portion 112b may also perform the function of absorbing the impact when external impact is applied so that the cell stack assembly 110 moves in the vertical direction (parallel to the Z-axis) within the module housing 200. This impact absorption function of the wing cover portion 112b may help prevent damage to the sensing line 810 and the temperature sensor 820 interposed between the cell wing portion W and the cell body portion B (see FIG. 13). The sensing assembly 800 including the sensing line 810 and the temperature sensor 820 will be described later in detail.

The fixing portion 112c has a shape corresponding to a guide rib 121b to be described later. As the fixing portion 112c is coupled to the guide rib 121b, the fixing portion 112c guides the fastening between the cell stack assembly 110 including the cooling fin 112 and the bus bar frame assemblies 120A, 120B.

The buffer pad 113 may be interposed between adjacent battery cells 111 to absorb volume expansion due to swelling of the battery cells 111.

The front bus bar frame assembly 120A and the rear bus bar frame assembly 120B are coupled to one side and the other side in the longitudinal direction (parallel to the X axis) of the cell stack assembly 110, respectively, so that a plurality of battery cells 111 are electrically connected. The front bus bar frame assembly 120A and the rear bus bar frame assembly 120B have substantially the same structure except that the front bus bar frame assembly 120A is provided with the inner terminal 123 and the rear bus bar frame assembly 120B is not provided with the inner terminal 123. Accordingly, a detailed description of the specific structure of the rear bus bar frame assembly 120B will be omitted, and a detailed description of the specific structure of the front bus bar frame assembly 120A will be intensively described.

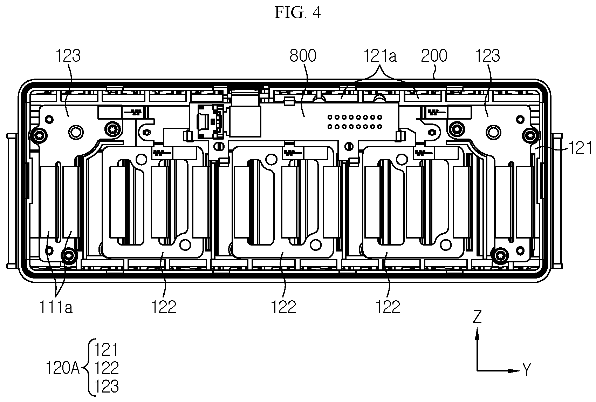

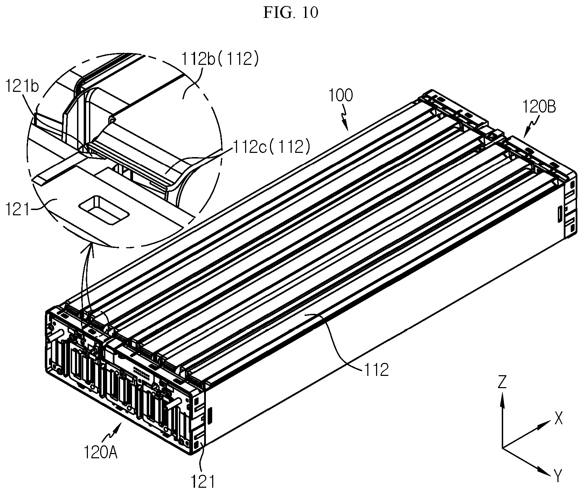

Referring to FIGS. 4 to 10, the front bus bar frame assembly 120A includes a bus bar frame 121 and a plurality of bus bars 122. In addition, the front bus bar frame assembly 120A may further include a pair of inner terminals 123. The bus bar frame 121 covers one side of the cell stack assembly 110 in the longitudinal direction (parallel to the X-axis).

The bus bar frame 121 has a plurality of cooling liquid holes 121a. The cooling liquid hole 121a functions as a passage so that the insulating cooling liquid introduced into the module housing 200 through the inlet P1 provided in the front sealing plate 300 may flow toward the cell stack assembly 110 through the bus bar frame 121.

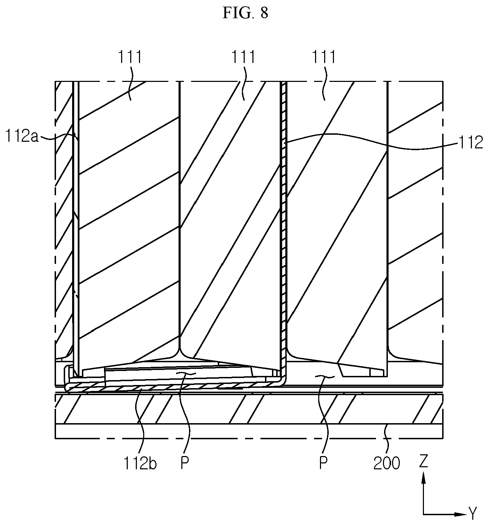

As shown in FIGS. 7 and 8, the cooling liquid flow path P is formed between the module housing 200 and the cell wing portion W. When the cell stack assembly 110 of the present disclosure includes the cooling fin 112, the cooling liquid flow path P may be formed between the wing cover portion 112b and the cell wing portion W in addition to between the module housing 200 and the cell wing portion W. Accordingly, for smooth supply and discharge of the insulating cooling liquid, the cooling liquid hole 121a may be formed between the module housing 200 and the cell wing portion W. Also, the cooling liquid hole 121a may be formed at a position corresponding to the cooling liquid flow path P formed between the wing cover portion 112b and the cell wing portion W.

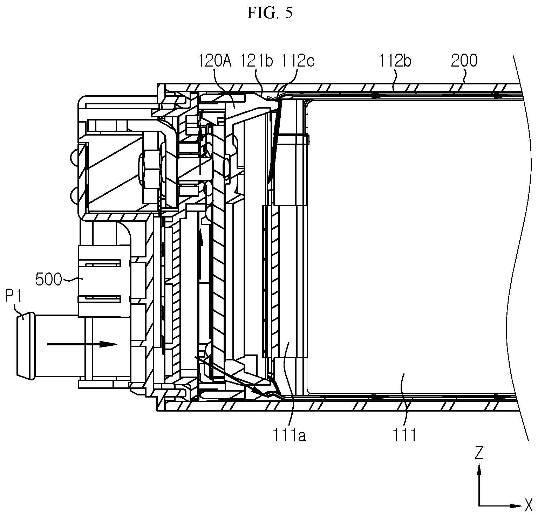

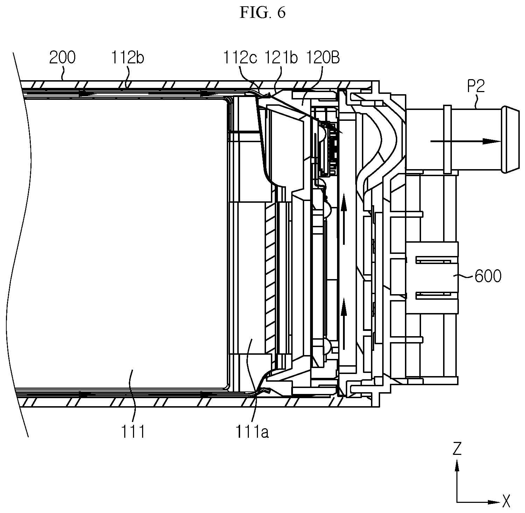

The insulating cooling liquid introduced toward the cell stack assembly 110 through the cooling liquid hole 121a formed in the front bus bar frame assembly 120A is flowed toward the rear bus bar frame assembly 120B through the cooling liquid flow path P along the arrow (see FIGS. 5 and 6). The insulating cooling liquid that has moved to the rear bus bar frame 120B flows toward the rear sealing plate 400 through the cooling liquid hole 121a formed in the rear bus bar frame 120B, and is emitted out of the battery module through an outlet P2 provided in the rear sealing plate 400. In this process, the insulating cooling liquid comes into direct contact with the electrode lead 111a of the battery cell 111 and the cell wing portion W to cool the battery cell 111.

The bus bar 122 is fixed on the bus bar frame 121 and is coupled to the electrode lead 111a drawn out through a lead slit formed in the bus bar frame 121 to electrically connect the plurality of battery cells 111.

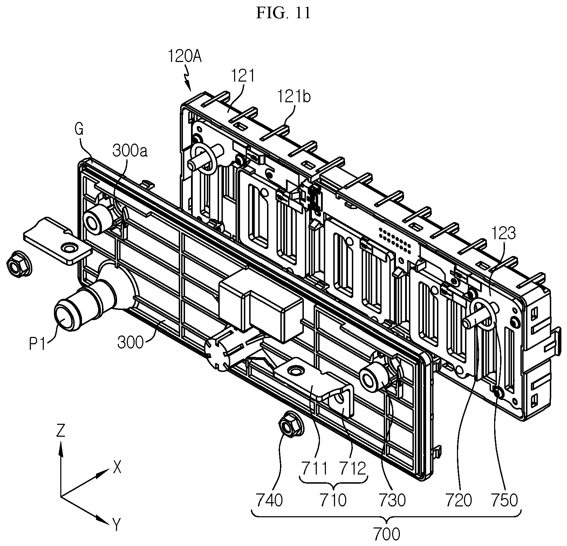

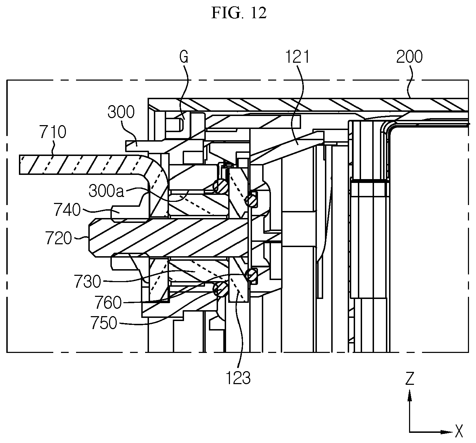

The inner terminal 123 is fixed on the bus bar frame 121 and is coupled to the electrode lead 111a of the battery cell 111 located at the outermost battery cell 111 among the battery cells 111 provided in the cell stack assembly 110. The inner terminal 123 functions as a high potential terminal. The inner terminal 123 located at one side of the longitudinal direction (parallel to the Y-axis) of the bus bar frame 121 functions as a positive electrode high potential terminal, and the inner terminal 123 located at the other longitudinal side of the bus bar frame 121 functions as a negative electrode high potential terminal. The inner terminal 123 is electrically connected to an outer terminal 710 (see FIGS. 11 and 12) to be described later.

Meanwhile, referring to FIGS. 5 to 10, the bus bar frame 121 of the front bus bar frame assembly 120A and the bus bar frame 121 of the rear bus bar frame assembly 120B include a plurality of guide ribs 121b formed on the top and bottom along the longitudinal direction (parallel to the Y-axis). The guide rib 121b has a shape extending in the direction toward the cell stack assembly 110. The guide rib 121b is formed at a position corresponding to the fixing portion 112c of the cooling fin 112.

As described above, the fixing portion 112c having a shape corresponding to the guide rib 121b is formed at both ends of the wing cover portion 112b of the cooling fin 112 in the longitudinal direction (parallel to the X-axis). By the guide rib 121b and the fixing portion 112c, the movement of the cooling fin 112 in the vertical direction (parallel to the Z-axis) and longitudinal direction (parallel to the X-axis) is restricted. Accordingly, when the front bus bar frame assembly 120A and the rear bus bar frame assembly 120B are coupled to the cell stack assembly 110, the coupling position may be guided, thereby increasing the convenience of assembly.

Referring to FIGS. 1 to 6, the module housing 200 accommodates a sub module 100 including the cell stack assembly 110, the front bus bar frame assembly 120A, and the rear bus bar frame assembly 120B. The module housing 200 has one side and the other side open in the longitudinal direction (parallel to the X-axis).

Referring to FIGS. 5, 6, 11 and 12, the front sealing plate 300 covers the opening formed at one side of the module housing 200 in the longitudinal direction (parallel to the X-axis). The front sealing plate 300 has a cooling liquid inlet P1 for inflow of the insulating cooling liquid. To prevent the insulating cooling liquid from leaking, a gasket G may be interposed between the edge surface of the front sealing plate 300 and the inner surface of the module housing 200 (see FIG. 12).

The front sealing plate 300 is provided with a pair of terminal holes 300a through which components for electrical connection between the inner terminal 123 provided in the front bus bar frame assembly 120A and the outer terminal 710 to be described later may pass. The terminal hole 300a is formed at a position corresponding to the inner terminal 123.

Referring to FIG. 6, the rear sealing plate 400 covers the opening at the other side in the longitudinal direction (parallel to the X-axis) of the module housing 200, and has a cooling liquid outlet P2 for discharging the insulating cooling liquid. As in the case of the front sealing plate 300, a gasket G may be interposed between the edge surface of the real sealing plate 400 and the inner surface of the module housing 200 to prevent the insulating cooling liquid from leaking.

The front sealing plate 300 and rear sealing plate 400 may be made of an insulating resin for electrical insulation.

Referring to FIGS. 11 and 12, the terminal assembly 700 includes an outer terminal 710 positioned on the outside of the front sealing plate 300 and a stud 720 electrically connecting the outer terminal 710 and the battery cell 111. The stud 720 is fixed to the inner terminal 123. The stud 720 may penetrate the inner terminal 123 and be fixed to the inner terminal 123 by press-fitting. The stud 720 fixed to the inner terminal 123 is drawn out through the terminal hole 300a formed in the front sealing plate 300 and coupled with the outer terminal 710.

The terminal assembly 700 may further include a ring-shaped terminal spacer 730 inserted into the terminal hole 300a formed in the front sealing plate 300. The terminal spacer 730 may be made of a metal material. If the terminal spacer 730 is provided, the stud 720 passes through the terminal spacer 730.

The terminal assembly 700 may further include a fastening nut 740 for fastening the outer terminal 710 to the stud 720. The fastening nut 740 is fastened to the stud 720 penetrating the terminal spacer 730 and the fastening portion 712 of the outer terminal 710 so that the fastening portion 712 of the outer terminal 710 is tightly fixed to the terminal spacer 730. Accordingly, the inner terminal 123 and the outer terminal 710 are electrically connected to each other through the terminal spacer 730.

The terminal assembly 700 may further include a first O-ring 750 that covers the outer circumference of the terminal spacer 730 and is interposed between the inner surface of the front sealing plate 300 and the inner terminal 123. Referring to FIGS. 11 and 12, the first O-ring 750 prevents the insulating cooling liquid introduced into the space between the front sealing plate 300 and the bus bar frame 121 from leaking to the outside of the front sealing plate 300 through the space between the inner surface of the terminal hole 300a and the terminal spacer 730.

In addition, the terminal assembly 700 may further include a second O-ring 760 that is positioned around the stud 720 press-fitted into the inner terminal 123 and exposed to the space between the inner terminal 123 and the bus bar frame 121, and is interposed between the inner terminal 123 and the bus bar frame 121. The second O-ring 760 prevents the insulating cooling liquid introduced into the space between the front sealing plate 300 and the bus bar frame 121 from leaking to the outside of the front sealing plate 300 through the space between the inner terminal 123 and the stud 720 and the space between the inner surface of the terminal spacer 730 and the stud 720.

Referring to FIGS. 1 and 2 and FIGS. 5 and 6, the front end plate 500 covers the front sealing plate 300 and is fixed to the module housing 200. The rear end plate 600 covers the rear sealing plate 400 and is fixed to the module housing 200.

The front end plate 500 includes a terminal exposing portion 500a for exposing the connection portion 711 of the outer terminal 710 to the outside of the front end plate 500, and an inlet exposing portion 500b for exposing the inlet P1 to the outside of the front end plate 500. The rear end plate 600 includes an outlet exposing portion 600b for exposing the cooling liquid outlet P2 to the outside of the rear end plate 600.

When the front end plate 500 and the rear end plate 600 are applied to the battery module according to the present disclosure, a gasket for preventing the insulating cooling liquid from leaking may be applied to the coupling area between the front end plate 500 and the module housing 200 and the coupling area between the rear end plate 600 and the module housing 200.

Referring to FIGS. 4, 7, and 13, the sensing assembly 800 is disposed on the top of the sub module 100 and senses the voltage of the battery cell 111. The sensing assembly 800 includes a sensing line 810 electrically connected to the plurality of battery cells 111 and extending from one end of the battery cell 111 in the longitudinal direction (parallel to the X-axis) to the other longitudinal end. The sensing line 810 is electrically connected to the battery cells 111 at one side and the other side of the cell stack assembly 110 in the longitudinal direction (parallel to the X-axis). The electrical connection between the sensing line 810 and the battery cell 111 may be realized by coupling the sensing line 810 to the bus bar 122. However, the present disclosure is not limited thereto, and it is also possible that the sensing line 810 is directly coupled to the electrode lead 111a of the battery cell 111.

The sensing line 810 is interposed between the cell body portion B of the pouch-type battery cell 111 and the cell wing portion W folded toward the cell body portion B. This is to prevent the sensing line 810 from being damaged by the insulating cooling liquid flowing inside the battery module.

The sensing assembly 800 may additionally perform the function of sensing the temperature of the battery cell 111 in addition to sensing the voltage. To this end, the sensing assembly 800 may further include at least one temperature sensor 820 mounted on the sensing line 810. The temperature sensor 820 may be disposed adjacent to the electrode lead 111a having a large heat generation. Like the sensing line 810, the temperature sensor 820 may be interposed between the cell body portion B of the battery cell 111 and the cell wing portion W folded toward the cell body portion B. This is to prevent the temperature sensor 820 from being damaged by the insulating cooling liquid flowing inside the battery module. In addition, this is to prevent or minimize the contact between the temperature sensor 820 and the insulating cooling liquid so that the temperature of the battery cell 111 can be accurately sensed. Meanwhile, the sensing line 810 and the temperature sensor 820 may be additionally covered by the wing cover portion 112b of the cooling fin 112 in a state of being covered by the cell wing portion W.

The sensing assembly 800 may further include a printed circuit board (PCB) 830 electrically connected to the sensing line 810 in addition to the sensing line 810. The PCB 830 may be fixed on the bus bar frame 121. A connector assembly (not shown) may be mounted on the PCB 830, and a control device such as a battery management system (BMS) (not shown) may be connected through this connector assembly. In this case, the BMS may measure and/or receive information about the voltage, temperature, etc. of the battery cell 111 and control charging/discharging of the battery module with reference to this.

A battery pack according to the invention inlcudes the battery module as described above. The battery pack may include additional components such as a pack housing and/or a battery management system (BMS) together with at least one battery module. The battery module may be fastened to the pack housing through the fastening hole H formed in the front end plate 500 and/or the rear end plate 600. That is, the fastening hole H may provide a space into which a fastening means such as a bolt for fastening the pack housing and the battery module is inserted. Meanwhile, when the battery pack includes a plurality of battery modules, it is also possible that the plurality of battery modules are fastened to each other through the fastening hole H formed in the front end plate 500 and/or the rear end plate 600.

The vehicle according to the invention includes at least one battery module as described above. The vehicle according to an embodiment of the present disclosure may be, for example, a hybrid vehicle or an electric vehicle that operates by being powered by the battery module.

The present disclosure has been described in detail. However, it should be understood that the detailed description and specific examples, while indicating preferred embodiments of the disclosure, are given by way of illustration only.

### [Explanation of reference signs]

100: sub module
110: cell stack assembly
111: battery cell
111a: electrode lead
112: cooling fin
112a: body contact portion
112b: wing cover portion
112c: fixing portion
113: buffer pad
P: cooling liquid flow path
120A: front bus bar frame assembly
120B: rear bus bar frame assembly
121: bus bar frame
121a: cooling liquid hole
121b: guide rib
122: bus bar
123: inner terminal
200: module housing
300: front sealing plate
300a: terminal hole
P1: inlet (inlet)
G: gasket
400: rear sealing plate
P2: outlet
500: front end plate
500a: terminal exposing portion
500b: inlet exposing portion
600: rear end plate
600b: outlet exposing portion
700: terminal assembly
710: outer terminal
711: connection portion
712: fastening portion
720: stud
730: terminal spacer
740: fastening nut
750: first O-ring
760: second O-ring
800: sensing assembly
810: sensing line
820: temperature sensor
830: PCB (Printed Circuit Board)

## Claims

1. A battery module, comprising:
a sub module (100) including a cell stack assembly (110) having a plurality of battery cells (111) and a cooling fin (112) interposed between adjacent battery cells (111);
a module housing (200) configured to accommodate the sub module (100);
a front sealing plate (300) configured to cover an opening at one longitudinal side of the module housing (200) and having an inlet (P1) for inflow of an insulating cooling liquid;
a rear sealing plate (400) configured to cover an opening at the other longitudinal side of the module housing (200) and having an outlet (P2) for discharging the insulating cooling liquid; and
a sensing assembly (800) configured to sense voltage of the battery cell (111),
wherein the sensing assembly (800) includes a sensing line (810) electrically connected to the plurality of battery cells (111) and extending from one longitudinal end of the battery cells (111) to the other longitudinal end,
wherein the sensing line (810) is interposed between a cell body portion (B) of the battery cell (111) and a cell wing portion (W) folded toward the cell body portion (B), and
wherein a cooling liquid flow path (P) is formed between the module housing (200) and the cell wing portion (W) of the battery cell (111).

2. The battery module according to claim 1, wherein the sensing assembly (800) is disposed on a top of the sub module (100).

3. The battery module according to claim 1, wherein the sensing assembly (800) further includes a temperature sensor (820) mounted on the sensing line (810).

4. The battery module according to claim 3, wherein the temperature sensor (820) is interposed between the cell body portion (B) of the battery cell (111) and the cell wing portion (W) folded toward the cell body portion (B).

5. The battery module according to claim 1, wherein the cooling fin (112) includes:
a body contact portion (112a) interposed between adjacent battery cells (111), and
a wing cover portion (112b) bent at any one of a top and bottom of the body contact portion (112a) to cover the cell wing portion (W) of the battery cell (111),
wherein the cooling liquid flow path (P) is formed between the wing cover portion (112b) and the cell wing portion (W).

6. The battery module according to claim 5, wherein the sub module (100) further includes:
a front bus bar frame assembly (120A) coupled to one longitudinal side of the cell stack assembly (110); and
a rear bus bar frame assembly (120B) coupled to the other longitudinal side of the cell stack assembly (110).

7. The battery module according to claim 6, wherein the front bus bar frame assembly (120A) and the rear bus bar frame assembly (120B) have a plurality of cooling liquid holes (121a) formed at a position corresponding to a cooling liquid flow path (P) formed between the module housing (200) and the cell wing portion (W) of the battery cell (111) and between the wing cover portion (112b) and the cell wing portion (W) of the battery cell (111).

8. The battery module according to claim 7, wherein an insulating cooling liquid introduced into the module housing (200) through the inlet (P1) passes through the cooling liquid hole (121a) formed in the front bus bar frame assembly (120A) and flows to the cooling liquid flow path (P).

9. The battery module according to claim 8, wherein the insulating cooling liquid passing through the cooling liquid flow path (P) passes through the cooling liquid hole (121a) formed in the rear bus bar frame assembly (120B) and is discharged to the outside of the module housing (200) through the outlet (P2).

10. A battery pack comprising the battery module according to any one of claims 1 to 9.

11. A vehicle comprising the battery module according to any one of claims 1 to 9.

## Patentansprüche

1. Batteriemodul, aufweisend:
ein Submodul (100), das eine Zellstapelanordnung (110) aufweist, die eine Vielzahl von Batteriezellen (111) und eine zwischen benachbarten Batteriezellen (111) angeordnete Kühlrippe (112) aufweist;
ein Modulgehäuse (200), das konfiguriert ist, das Submodul (100) aufzunehmen;
eine vordere Dichtungsplatte (300), die konfiguriert ist, eine Öffnung an einer Längsseite des Modulgehäuses (200) abzudecken, und einen Einlass (P1) für einen Zufluss einer isolierenden Kühlflüssigkeit aufweist;
eine hintere Dichtungsplatte (400), die konfiguriert ist, eine Öffnung an der anderen Längsseite des Modulgehäuses (200) abzudecken, und einen Auslass (P2) zum Abführen der isolierenden Kühlflüssigkeit aufweist; und
eine Erfassungsanordnung (800), die konfiguriert ist, eine Spannung der Batteriezelle (111) zu erfassen,
wobei die Erfassungsanordnung (800) eine Erfassungsleitung (810) aufweist, die elektrisch mit der Vielzahl von Batteriezellen (111) verbunden ist und sich von einem Längsende der Batteriezellen (111) zu dem anderen Längsende erstreckt,
wobei die Erfassungsleitung (810) zwischen einem Zellkörperabschnitt (B) der Batteriezelle (111) und einem zu dem Zellkörperabschnitt (B) hin gefalteten Zellflügelabschnitt (W) angeordnet ist, und
wobei ein Kühlflüssigkeitsströmungsweg (P) zwischen dem Modulgehäuse (200) und dem Zellflügelabschnitt (W) der Batteriezelle (111) ausgebildet ist.

2. Batteriemodul nach Anspruch 1, wobei die Erfassungsanordnung (800) auf einer Oberseite des Submoduls (100) angeordnet ist.

3. Batteriemodul nach Anspruch 1, wobei die Erfassungsanordnung (800) ferner einen Temperatursensor (820) aufweist, der an der Erfassungsleitung (810) montiert ist.

4. Batteriemodul nach Anspruch 3, wobei der Temperatursensor (820) zwischen dem Zellkörperabschnitt (B) der Batteriezelle (111) und dem zu dem Zellkörperabschnitt (B) hin gefalteten Zellflügelabschnitt (W) angeordnet ist.

5. Batteriemodul nach Anspruch 1, wobei die Kühlrippe (112) aufweist:
einen Körperkontaktabschnitt (112a), der zwischen benachbarten Batteriezellen (111) angeordnet ist; und
einen Flügelabdeckabschnitt (112b), der an einem oberen oder unteren Ende des Körperkontaktabschnitts (112a) gebogen ist, um den Zellflügelabschnitt (W) der Batteriezelle (111) abzudecken,
wobei der Kühlflüssigkeitsströmungsweg (P) zwischen dem Flügelabdeckabschnitt (112b) und dem Zellflügelabschnitt (W) ausgebildet ist.

6. Batteriemodul nach Anspruch 5, wobei das Submodul (100) ferner aufweist:
eine vordere Busbar-Rahmenanordnung (120A), die mit einer Längsseite der Zellstapelanordnung (110) gekoppelt ist; und
eine hintere Busbar-Rahmenanordnung (120B), die mit der anderen Längsseite der Zellstapelanordnung (110) gekoppelt ist.

7. Batteriemodul nach Anspruch 6, wobei die vordere Busbar-Rahmenanordnung (120A) und die hintere Busbar-Rahmenanordnung (120B) eine Vielzahl von Kühlflüssigkeitslöchern (121a) aufweisen, die an einer Position ausgebildet sind, die einem Kühlflüssigkeitsströmungsweg (P) entspricht, der zwischen dem Modulgehäuse (200) und dem Zellflügelabschnitt (W) der Batteriezelle (111) sowie zwischen dem Flügelabdeckabschnitt (112b) und dem Zellflügelabschnitt (W) der Batteriezelle (111) ausgebildet ist.

8. Batteriemodul nach Anspruch 7, wobei eine isolierende Kühlflüssigkeit, die durch den Einlass (P1) in das Modulgehäuse (200) eingeleitet wird, durch das in der vorderen Busbar-Rahmenanordnung (120A) ausgebildete Kühlflüssigkeitsloch (121a) hindurchtritt und zu dem Kühlflüssigkeitsströmungsweg (P) strömt.

9. Batteriemodul nach Anspruch 8, wobei die isolierende Kühlflüssigkeit, die durch den Kühlflüssigkeitsströmungsweg (P) strömt, durch das in der hinteren Busbar-Rahmenanordnung (120B) ausgebildete Kühlflüssigkeitsloch (121a) hindurchtritt und durch den Auslass (P2) nach außerhalb des Modulgehäuses (200) abgeführt wird.

10. Batteriepack, aufweisend das Batteriemodul nach einem der Ansprüche 1 bis 9.

11. Fahrzeug, aufweisend das Batteriemodul nach einem der Ansprüche 1 bis 9.

## Revendications

1. Module de batterie, comportant :
un sous-module (100) comprenant un ensemble formant empilement d'éléments de batterie (110) ayant une pluralité d'éléments de batterie (111) et une ailette de refroidissement (112) se trouvant placée entre des éléments de batterie adjacents (111) ;
un boîtier de module (200) configuré pour recevoir le sous-module (100) ;
une plaque d'étanchéité avant (300) configurée pour recouvrir une ouverture au niveau d'un côté longitudinal du boîtier de module (200) et ayant une entrée (P1) à des fins d'amenée d'un liquide de refroidissement isolant ;
une plaque d'étanchéité arrière (400) configurée pour recouvrir une ouverture au niveau de l'autre côté longitudinal du boîtier de module (200) et ayant une sortie (P2) servant à évacuer le liquide de refroidissement isolant ; et
un ensemble de détection (800) configuré pour détecter la tension de l'élément de batterie (111),
dans lequel l'ensemble de détection (800) comprend une ligne de détection (810) connectée électriquement à la pluralité d'éléments de batterie (111) et s'étendant d'une extrémité longitudinale des éléments de batterie (111) à l'autre extrémité longitudinale,
dans lequel la ligne de détection (810) se trouve placée entre une partie formant corps d'élément (B) de l'élément de batterie (111) et une partie formant ailette d'élément (W) repliée vers la partie formant corps d'élément (B), et
dans lequel un trajet d'écoulement (P) de liquide de refroidissement est formé entre le boîtier de module (200) et la partie formant ailette d'élément (W) de l'élément de batterie (111).

2. Module de batterie selon la revendication 1, dans lequel l'ensemble de détection (800) est disposé sur une partie supérieure du sous-module (100).

3. Module de batterie selon la revendication 1, dans lequel l'ensemble de détection (800) comprend par ailleurs un capteur de température (820) monté sur la ligne de détection (810).

4. Module de batterie selon la revendication 3, dans lequel le capteur de température (820) se trouve placé entre la partie formant corps d'élément (B) de l'élément de batterie (111) et la partie formant ailette d'élément (W) repliée vers la partie formant corps d'élément (B).

5. Module de batterie selon la revendication 1, dans lequel l'ailette de refroidissement (112) comprend :
une partie de contact de corps (112a) se trouvant placée entre des éléments de batterie adjacents (111), et
une partie formant couvercle d'ailette (112b) repliée au niveau de l'une quelconque des parties supérieure et inférieure de la partie de contact de corps (112a) afin de recouvrir la partie formant ailette d'élément (W) de l'élément de batterie (111),
dans lequel le trajet d'écoulement (P) de liquide de refroidissement est formé entre la partie formant couvercle d'ailette (112b) et la partie formant ailette d'élément (W).

6. Module de batterie selon la revendication 5, dans lequel le sous-module (100) comprend par ailleurs :
un ensemble formant cadre de barre omnibus avant (120A) couplé au niveau d'un côté longitudinal de l'ensemble formant empilement d'éléments de batterie (110) ; et
un ensemble formant cadre de barre omnibus arrière (120B) couplé au niveau de l'autre côté longitudinal de l'ensemble formant empilement d'éléments de batterie (110).

7. Module de batterie selon la revendication 6, dans lequel l'ensemble formant cadre de barre omnibus avant (120A) et l'ensemble formant cadre de barre omnibus arrière (120B) ont une pluralité de trous de liquide de refroidissement (121a) formés au niveau d'une position qui correspond à un trajet d'écoulement (P) de liquide de refroidissement formé entre le boîtier de module (200) et la partie formant ailette d'élément (W) de l'élément de batterie (111) et entre la partie formant couvercle d'ailette (112b) et la partie formant ailette d'élément (W) de l'élément de batterie (111).

8. Module de batterie selon la revendication 7, dans lequel un liquide de refroidissement isolant qui est introduit dans le boîtier de module (200) par le biais de l'entrée (P1) passe par le trou de liquide de refroidissement (121a) formé dans l'ensemble formant cadre de barre omnibus avant (120A) et s'écoule jusqu'au trajet d'écoulement (P) de liquide de refroidissement.

9. Module de batterie selon la revendication 8, dans lequel le liquide de refroidissement isolant qui passe par le trajet d'écoulement (P) de liquide de refroidissement passe par le trou de liquide de refroidissement (121a) formé dans l'ensemble formant cadre de barre omnibus arrière (120B) et est évacué vers l'extérieur du boîtier de module (200) par le biais de la sortie (P2).

10. Bloc de batterie, comportant le module de batterie selon l'une quelconque des revendications 1 à 9.

11. Véhicule comportant le module de batterie selon l'une quelconque des revendications 1 à 9.
